# EUROPÄISCHE PATENTSCHRIFT

(11) **EP 3 170 646 B1**
(45) Veröffentlichungstag und Bekanntmachung des Hinweises auf die Patenterteilung: **02.12.2020**
(21) Anmeldenummer: 16002160.6
(22) Anmeldetag: 06.10.2016
(51) Int. Cl.: B29C 63/10

(54) **VERFAHREN ZUR HERSTELLUNG EINES AUSKLEIDUNGSSCHLAUCHS ZUR AUSKLEIDUNG VON ROHRLEITUNGEN SOWIE VORRICHTUNG ZUR DURCHFÜHRUNG DES VERFAHRENS**
METHOD FOR PRODUCING A CLADDING HOSE FOR CLADDING PIPELINES AND DEVICE FOR PERFORMING THE METHOD
PROCÉDÉ DE FABRICATION D'UNE CHEMISE DESTINÉE À REVÊTIR DES CONDUITES ET DISPOSITIF D'EXÉCUTION DU PROCÉDÉ

(30) Priorität: 17.11.2015 DE 102015014730
(43) Veröffentlichungstag der Anmeldung: 24.05.2017
(73) Patentinhaber: Brandenburger Liner GmbH & Co. KG, 76829 Landau/Pfalz (DE); Brandenburger, Tim, 76829 Landau (DE)
(72) Erfinder: Brandenburger, Tim, 76829 Landau (DE); Duttenhöfer, Peter, 76831 Ilbesheim (DE); Singler, Timo, 67158 Ellerstadt (DE)
(74) Vertreter: Kesselhut, Wolf

(56) Entgegenhaltungen:
- DE-C2- 19 823 714
- FR-A1- 2 732 925
- JP-A- S6 179 634
- US-A- 3 570 749
- US-A- 4 120 324

## Beschreibung

Die Erfindung betrifft eine Vorrichtung zur Herstellung eines Auskleidungsschlauchs zur Auskleidung von Rohrleitungen gemäß dem Oberbegriff von Anspruch 1.

Auf dem Gebiet der grabenlosen Sanierung von defekten Abwasserkanälen werden zunehmend Auskleidungsschläuche eingesetzt, die als "Inliner" bezeichnet werden und aus einem Fasermaterial, insbesondere aus Glasfasergewebe bestehen, welches mit einem flüssigen Reaktionsharz getränkt ist, das nach dem Einziehen des Auskleidungsschlauchs in die Rohrleitung und Expandieren desselben mit Hilfe von Druckluft durch Licht einer Strahlungsquelle ausgehärtet wird.

Ein solcher Auskleidungsschlauch sowie ein Verfahren und eine Vorrichtung zur Herstellung eines solchen sind beispielsweise aus der DE 198 23 714 C2 bekannt.

Die Herstellung des Auskleidungsschlauchs erfolgt dadurch, dass die harzgetränkten Faserbänder in einer Wickelvorrichtung überlappend auf einen für UV-Licht durchlässigen Innenfolienschlauch aufgewickelt werden, der zuvor beispielsweise auf ein fliegend gelagertes Halterohr aufgezogen wird, an dessen Ende sich ein Wickeldorn befindet, über den der Innenfolienschlauch während des Wickelvorgangs gezogen wird. Dazu weist der Wickeldorn eine Führungseinrichtung mit elektrisch angetriebenen umlaufenden Riemen auf, die den Innenfolienschlauch während der Produktion von der Innenseite her kontaktieren und über den Wickeldorn fördern, sowie eine zugeordnete Abzugseinrichtung mit zwei umlaufenden Abzugswalzen, die den gewickelten Auskleidungsschlauch auf der Außenseite kontaktieren und vom Wickeldorn abziehen.

Bei der zuvor beschriebenen Wickelvorrichtung ergibt sich das Problem, dass die elektrisch angetriebene Führungseinrichtungen mit Energie versorgt und die hierfür erforderlichen Versorgungs- und Steuerleitungen vor und während der Produktion eines Auskleidungsschlauchs durch den gesamten umfänglich geschlossenen Innenfolienschlauch hindurch geführt werden müssen. Dies schließt grundsätzlich die Fertigung von Auskleidungsschläuchen mit einer beliebigen Länge auf den zuvor beschriebenen Wickeldornen aus.

Ein weiteres Problem ergibt sich in diesem Zusammenhang durch die zwingend erforderliche Synchronisation der elektrisch angetriebenen Führungseinrichtungen im Inneren des Auskleidungsschlauchs sowie der ebenfalls elektrisch angetriebenen Abzugseinrichtung auf dessen Außenseite. Treten während der Produktion Spannungsschwankungen in der Längsrichtung des Innenfolienschlauchs, bzw. Auskleidungsschlauchs auf, so führt dies zu einem asynchronen Betrieb der der Abzugseinrichtung und der Führungseinrichtungen, durch die der Innenfolienschlauch entweder lokal gestaucht oder gedehnt wird. Beides kann zu Verschiebungen und Verwerfungen zwischen dem Innenfolienschlauch und der darauf angeordneten gewickelten Lage aus Faserbändern führen, aus denen ein Faltenwurf der Folie des Innenfolienschlauchs resultieren kann, durch den die Qualität des Auskleidungsschlauchs nach dem Aushärten erheblich beeinträchtigt wird. Im schlimmsten Fall kann durch einen solchen Faltenwurf eine Undichtigkeit im Auskleidungsschlauch entstehen, die - wenn der Schaden zunächst unentdeckt bleibt -nach dem Einziehen des Auskleidungsschlauchs in eine zu sanierende Rohrleitung während des sich anschließenden Aufstellens des Auskleidungsschlauchs zum Entweichen der Druckluft sowie einem Zusammenfallen des Liners während des Aushärtens führt.

Aus der FR 2732925 A1 ist eine Vorrichtung zur Herstellung von Elementen aus Verbundwerkstoff bekannt, welche einen Wickeldorn umfasst, auf dessen Außenseite endlos umlaufende, als Ketten ausgeführte Zugmittel angeordnet sind, auf die das bandförmige Material zur Erzeugung des Verbundwerkstoffs aufgewickelt wird. Das Dokument gibt keinen Hinweis darauf, das Zugmittel als pilzkopfartigen Riemen auszugestalten, welcher auf seiner Unterseite einen Mittensteg umfasst und beidseitig kugelgelagert ist.

Demgemäß ist es eine Aufgabe der vorliegenden Erfindung, eine Vorrichtung zu schaffen, mit welcher sich ein aus harzgetränkten Faserbändern gewickelter Auskleidungsschlauch mit verringertem Vorrichtungsaufwand fertigen lässt.

Diese Aufgabe wird erfindungsgemäß durch eine Vorrichtung mit den Merkmalen von Anspruch 1 gelöst.

Weitere Merkmale der Erfindung sind in den Unteransprüchen beschrieben.

Bei einem Verfahren zur Herstellung eines Auskleidungsschlauchs zur Auskleidung von Rohrleitungen oder Kanälen, bei welchem die erfindungsgemäße Vorrichtung einsetzbar ist, wird ein umfänglich geschlossener Innenfolienschlauch über einen Wickeldorn einer Wickelvorrichtung bewegt. Der auf dem Wickeldorn mittels einer Führungseinrichtung geführte Innenfolienschlauch wird dabei mit einem Faserband umwickelt, das mit einem flüssigen Reaktionsharz getränkt ist, welches insbesondere durch UV-Licht ausgehärtet werden kann. Hierbei erfolgt die Führung des Innenfolienschlauchs über wenigstens zwei antriebslos umlaufende, am Wickeldorn aufgenommene endlose Zugmittel, insbesondere Riemen, die zur Reduzierung der Reibung vorzugsweise kugelgelagert sind. Der mit dem Faserband umwickelte Innenfolienschlauch wird während des Aufwickelns des Faserbandes ausschließlich durch eine von außen auf das gewickelte Faserband wirkende Abzugseinrichtung über den Wickeldorn gefördert.

Die antriebslose Ausgestaltung der endlosen umlaufenden Zugmittel, an denen der Innenfolienschlauch anliegt, hat den Vorteil, dass der empfindliche Innenfolienschlauch beliebig lang ausgeführt werden kann und sich eine erhebliche Zeiteinsparung bei der Produktion der Auskleidungsschläuche ergibt, da keine Versorgungsleitungen durch den Innenfolienschlauch gelegt werden müssen. Zudem lässt sich das Gewicht des Wickeldorns aufgrund der entfallenden elektrischen Antriebe und mechanischen Getriebe, die bisher zum antreiben der umlaufenden Riemen erforderlich waren, in vorteilhafter Weise verringern, wodurch sich die gesamte Konstruktion der Komponenten zur Aufnahme des Halterohres, an welchem der Wickeldorn fliegend gelagert wird, erheblich vereinfacht.

Nach einem weiteren Gedanken kann die Führungseinrichtung mit einer zusätzlichen Gegenkraft beaufschlagt werden, welche der von der Abzugseinrichtung auf den Auskleidungsschlauch ausgeübten Abzugskraft entgegen gerichtet ist.

Hierdurch ergibt sich der Vorteil, dass der Innenfolienschlauch mit einer definierten Vorspannung beaufschlagt werden kann, durch die eine optimale Anlage des Innenfolienschlauchs am gewickelten Faserband erhalten und so ein Stauchen des Auskleidungsschlauches verhindert wird.

Bei der zuvor beschriebenen Ausführungsform ist die Gegenkraft vorzugsweise veränderbar, wodurch es ermöglicht wird, die auf den Innenfolienschlauch in Längsrichtung ausgeübte Zugspannung in Abhängigkeit vom Durchmesser des Auskleidungsschlauchs sowie auch den Materialeigenschaften des Innenfolienschlauchs oder des aufgewickelten Fasermaterials zu wählen, um den Produktionsprozess zu verbessern.

Ein weiterer Vorteil, der mit einer veränderbaren Gegenkraft einhergeht, besteht darin, dass auftretende Spannungsschwankungen in Längsrichtung des Innenfolienschlauchs, gewünschten Falls durch eine Regelung der Gegenkraft in der Weise ausgeglichen werden können, dass eine im Wesentlichen konstante Gegenkraft erzeugt wird und so der Innenfolienschlauch während des gesamten Produktionsprozesses mit einer nahezu konstanten Zugspannung beaufschlagen wird. Dadurch wird ein lokales Dehnen oder Stauchen des empfindlichen Innenfolienschlauchs und eine damit einhergehende Schwächung oder auch ein Faltenwurf des Folienmaterials verhindert und die Fertigungsqualität entsprechend erhöht.

Gemäß der Erfindung umfasst eine erfindungsgemäße Vorrichtung zur Herstellung eines Auskleidungsschlauchs zur Auskleidung von Rohrleitungen einen Wickeldorn, an dem eine Führungseinrichtung mit wenigstens einem umlaufenden Zugmittel angeordnet ist. Der Innenfolienschlauch wird durch eine Abzugseinrichtung über die Führungseinrichtung gezogen, die vorzugsweise zwei die Außenseite des Auskleidungsschlauchs kontaktierende Abzugswalzen umfasst, jedoch alternativ auch zwei oder mehr umlaufende angetriebene Riemen umfassen kann. Die Führungseinrichtung umfasst ein im Wesentlichen parallel zur Oberfläche des Wickeldorns bewegbares endloses umlaufendes Zugmittel , das über wenigstens zwei am Wickeldorn aufgenommene freilaufende Führungsrollen bewegt wird, d.h. über Führungsrollen, die nicht mit einem Antrieb gekoppelt sind, welcher diese in Vorschubrichtung des Auskleidungsschlauchs antreibt. Die Vorrichtung zeichnet sich dadurch aus, dass der endlose Riemen auf der Unterseite einen Mittensteg umfasst und beidseitig des Mittenstegs auf Kugellagern gelagert ist, die beispielsweise an einem gemeinsamen Trägerkörper der Führungseinrichtung befestigt sind. Hierbei erstrecken sich die seitlichen Auflageflächen des Riemens vorzugsweise flügelartig über die Stirnseiten der Kugellager hinaus, so dass die Kugellager vollständig durch die Riemen abgedeckt sind und das Folienmaterial des Innenfolienschlauchs nicht in die rotierenden Teile der Kugellager gelangen kann. Ebenso ist eine invertierte Ausführungsform denkbar, bei der die Kugellager in der Mitte in einer Längsrille des Riemens angebracht sind und jeweils seitlich davon durch Stege begrenzt werden.

Diese antriebslose Ausgestaltung der Führungseinrichtung, bzw. Führungseinrichtungen des Wickeldorns, ermöglicht es, dass der umfänglich geschlossene Innenfolienschlauch dem Wickeldorn beispielsweise von einer Rolle aus in einer beliebigen Länge ohne vorheriges Abwickeln und Einführen der Steuerungs- und Versorgungsleitungen zugeführt werden kann.

Durch die Erfindung ergibt sich der weitere Vorteil, dass für den Betrieb des Wickeldorns keine zusätzliche elektrische Energie benötigt wird, da die umlaufenden Zugmittel, die den Innenfolienschlauch während des Wickelvorgangs führen und in Umfangsrichtung spannen, und von denen wenigstens zwei auf einander gegenüberliegenden Seiten des Wickeldorns angeordnet sind, allein durch die von der Abzugseinrichtung ausgeübte Zugkraft angetrieben werden.

Dadurch, dass derendlose Riemen über seine Länge hinweg auf Kugellagern geführt ist und einen pilzkopfartigen Querschnitt besitzt, ergibt sich der weitere Vorteil, dass der gegenüber mechanischen Belastungen empfindliche Innenfolienschlauch nahezu auf der gesamten äußeren Oberfläche des Riemens gleichmäßig anliegt.

Bei einer weiteren Ausführungsform der Erfindung weist der endlose Riemen auf der Unterseite vorzugsweise kettengliedartige Verstärkungselemente auf. Diese sind bevorzugt aus einem härteren Werkstoff gefertigt, als das auf die Oberseite aufgebrachte gummiartige Material. So können die Verstärkungselemente beispielsweise aus Konstruktionskunstoffen gefertigt sein, während die Oberseite der Riemen beispielsweise aus einem gummielastischen Werkstoff, insbesondere aus elastischem Kautschuk, besteht.

Dies hat den Vorteil, dass sich der Rollwiderstand des Riemens gegenüber einem Riemen, der ausschließlich oder nahezu ausschließlich aus einem gummielastischen Werkstoff besteht, weiter reduziert.

Die erfindungsgemäße Ausführungsform besitzt ebenfalls den Vorteil, dass der Riemen geführt läuft und der Rollwiderstand dadurch abermals verringert wird.

Bei der bevorzugten Ausführungsform der Erfindung ist zumindest einer Führungsrolle ein Bremselement, beispielsweise eine elektrische oder magnetische Wirbelstrombremse, zugeordnet.

Der Einsatz einer elektrischen oder auch magnetischen Wirbelstrom-Bremseinrichtung besitzt den Vorteil, dass die auf den Innenfolienschlauch wirkende, der Abzugsrichtung entgegen gerichtete Kraft, gewünschtenfalls gezielt verändert werden kann, ohne dass entstehender Bremsabrieb, wie er beispielsweise bei einer mechanischen Reibbremse zu beobachten ist, den Auskleidungsschlauch im Inneren verunreinigt.

Gemäß einer weiteren Ausführungsform der Erfindung ist der Führungseinrichtung eine Verstelleinrichtung zum Verstellen des Durchmessers des Wickeldorns zugeordnet. Die Verstelleinrichtung kann beispielsweise eine sich in Längsrichtung des Wickeldorns erstreckende zentrale Welle umfassen, deren Drehbewegung an mehreren Stellen über Zahnräder auf Spindelantriebe oder Zahnstangen übertragen wird, welche auf die beweglich am Wickeldorn aufgenommenen Führungseinrichtungen wirken.

Die zuvor beschriebene Ausführungsform der Erfindung besitzt den Vorteil, dass durch ein Verdrehen der zentralen Welle alle Führungseinrichtungen gleichzeitig in radialer Richtung verfahren werden können. Dies ermöglicht es, dass der Durchmesser des Wickeldorns im Wesentlichen gleichmäßig in radialer Richtung vergrößert oder verringert werden kann.

Nach einem weiteren der Erfindung zugrunde liegenden Gedanken ist wenigstens eine der Führungseinrichtungen in einer senkrecht zur Abzugsrichtung des Auskleidungsschlauchs verlaufenden Ebene beweglich am Wickeldorn aufgenommen und wird durch federelastische Mittel, die sich zumindest indirekt an einem gestellfesten Teil des Wickeldorns abstützen, mit einer im Wesentlichen konstanten federelastischen Kraft in radialer Richtung beaufschlagt.

Dies hat den Vorteil, dass fertigungsbedingte Durchmesserschwankungen des Innenfolienschlauchs automatisch ausgeglichen werden und die Gefahr einer Faltenbildung infolge von umfänglichen Spannungsschwankungen im Folienmaterial weiter verringert wird.

Die federelastischen Mittel können beispielsweise ein pneumatisches Federelement, insbesondere ein Balgzylinder oder einen Pneumatikzylinder enthalten, welcher durch eine Druckluftquelle mit Druckluft beaufschlagt wird, die ein erheblich größeres Volumen, beispielsweise ein 10 bis 100 mal so großes Volumen, wie das Volumen des Arbeitsraums des pneumatischen Federelements aufweist.

Dies ermöglicht es, die auf den Innenfolienschlauch in radialer Richtung wirkende Kraft beispielsweise durch ein Erhöhen oder Erniedrigen des Luftdrucks in der Druckluftquelle einzustellen und damit den Innenfolienschlauch mit unterschiedlichen Vorspannungen zu beaufschlagen.

Die Erfindung wird nachfolgend mit Bezug auf die Zeichnungen anhand einer bevorzugten Ausführungsform beschrieben.

In den Zeichnungen zeigen:
- Fig. 1: Eine schematische Seitenansicht einer erfindungsgemäßen Vorrichtung mit einer angedeuteten Wickelvorrichtung während der Produktion eines Auskleidungsschlauches,
- Fig. 2: eine schematische Seitenansicht einer erfindungsgemäßen Führungseinrichtung,
- Fig. 3: eine schematische Querschnittsdarstellung eines erfindungsgemäßen kugelgelagerten Riemens mit Mittensteg,
- Fig. 4: eine schematische Querschnittsdarstellung eines erfindungsgemäßen Riemens mit Verstärkungselementen, und
- Fig. 5: eine schematische Darstellung einer erfindungsgemäßen Verstelleinrichtung.

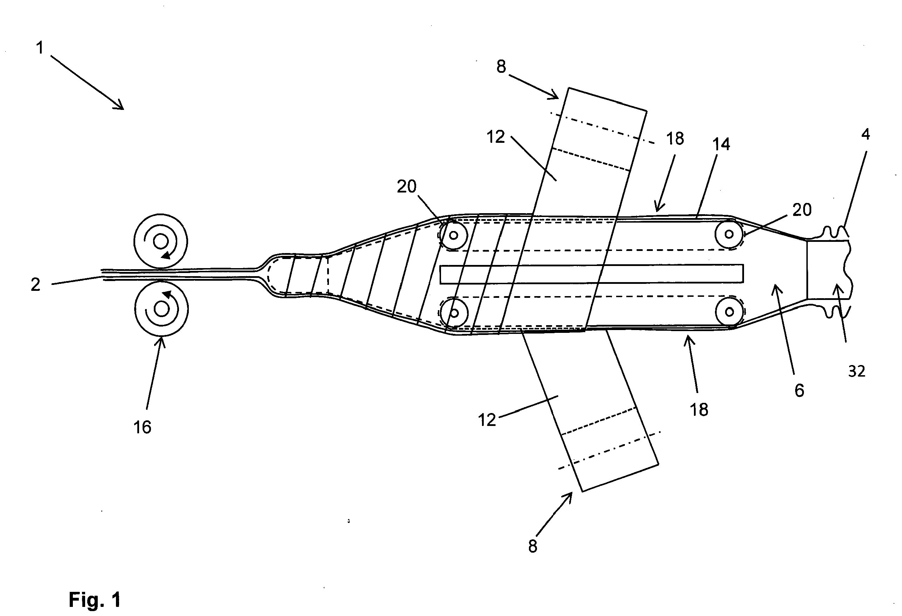

Wie in der Darstellung von Fig. 1 gezeigt ist, umfasst eine erfindungsgemäße Vorrichtung 1 zur Herstellung eines Auskleidungsschlauchs 2 zur Auskleidung von Rohrleitungen einen Wickeldorn 6, an dem wenigstens eine, vorzugsweise jedoch zwei oder mehr Führungseinrichtungen 18 angeordnet ist. Der Auskleidungsschlauch 2 besteht aus einem umfänglich geschlossenen Innenfolienschlauch 4 und wenigstens einem auf den Innenfolienschlauch 4 durch eine schematisch angedeutete Wickelvorrichtung 8 überlappend aufgewickelten Faserband 12, das mit einem insbesondere durch UV-Licht härtbaren Reaktionsharz getränkt ist. Wie der Darstellung der Figur 1 entnommen werden kann, ist der Wickeldorn 6 an einem fliegend gelagerten Halterohr 32 befestigt, auf welches ein zu verarbeitender Abschnitt des Innenfolienschlauchs 4 aufgezogen und im zusammengeschobenen Zustand gespeichert wird.

Die Führungseinrichtung 18 weist ein im Wesentlichen parallel zur Oberfläche des Wickeldorns 6 bewegbares endlos umlaufendes Zugmittel auf, welches vorzugsweise als umlaufender Riemen 14 ausgestaltet ist, über welchen hinweg der Innenfolienschlauch 4 durch eine zwei Zugwalzen enthaltene Abzugseinrichtung 16 gezogen wird.

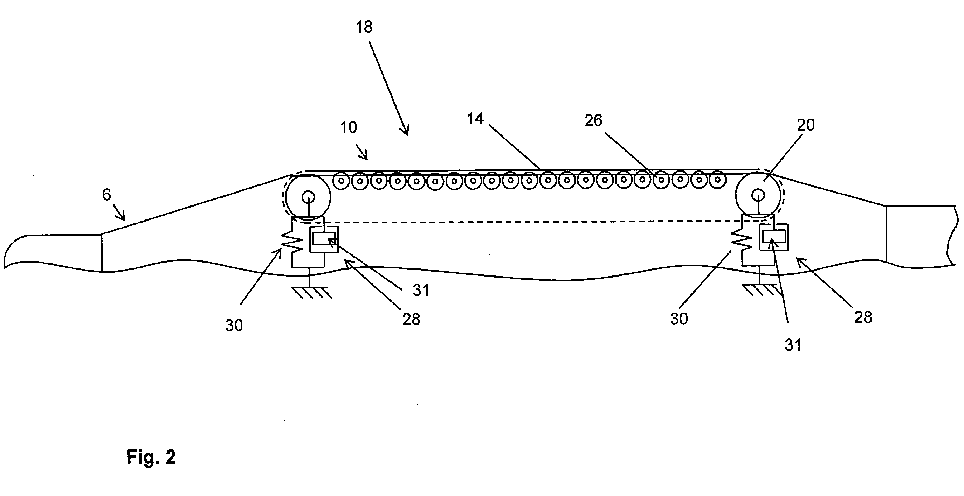

Wie der Darstellung der Figuren 1 und 2 weiterhin entnommen werden kann, läuft der endlose umlaufende Riemen 14 über wenigstens zwei am Wickeldorn 6 drehbar gelagerte, frei laufende Führungsrollen 20, die nicht angetrieben sind und die die Umkehrpunkte bilden, an denen der Riemen 14, bzw. allgemein gesprochen das endlose Zugmittel, umgelenkt wird.

Ein Verfahren zur Herstellung eines Auskleidungsschlauchs 2 zur Auskleidung von Rohrleitungen wir nachfolgend mit Bezug auf die Figur 1 beschrieben. Bei diesem wird der umfänglich geschlossene Innenfolienschlauch 4, der zuvor von Hand auf das Halterohr 32 aufgeschoben wurde, durch die beiden Zugwalzen der Abzugseinrichtung 16 über den Wickeldorn 6 der Wickelvorrichtung 8 gezogen. Während des Vorschubs des auf dem Wickeldorn 6 mit Hilfe der Führungseinrichtungen 18 geführten Innenfolienschlauchs 4 wird dieser durch eine Rotation der Wickelvorrichtung 8 mit wenigstens einem Faserband 12 umwickelt, das mit einem flüssigen Reaktionsharz getränkt ist, welches durch elektromagnetische Strahlung, insbesondere durch UV-Licht, oder auch durch Wärme, ausgehärtet werden kann.

Die Abzugseinrichtung 16 bewegt dabei den Innenfolienschlauch 4, der nach einigen Umdrehungen der Wickelvorrichtung 8 mit dem Faserband 12 umwickelt als Auskleidungsschlauch 2 in die Abzugseinrichtung 16 eintritt, in einer auf die Rotationsbewegung der Wickelvorrichtung 8 abgestimmten Geschwindigkeit über den Wickeldorn 6 hinweg. Die Führung des Innenfolienschlauchs 4 erfolgt in erfindungsgemäßer Weise ausschließlich über die antriebslos umlaufenden endlosen Riemen 14 der jeweiligen Führungseinrichtungen 18, von denen bei kleinen Durchmessern wenigstens 2, und bei großen Durchmessern vier, sechs oder gar bis zu acht Führungseinrichtungen am Wickeldorn 6 vorgesehen sein können. Der mit dem Faserband 12 umwickelte Innenfolienschlauch 4 wird während der Produktion erfindungsgemäß ausschließlich durch die von außen auf das Faserband 12 wirkende Abzugseinrichtung 16 über den Wickeldorn 6 gefördert.

Gemäß einer alternativen, in den Zeichnungen nicht näher dargestellten Ausführungsform der erfindungsgemäßen Vorrichtung 1 kann die Abzugseinrichtung 16 zusätzlich oder alternativ zu den beiden in Fig. 1 gezeigten Abzugswalzen 16 eine oder auch mehrere angetriebene Walzen oder angetriebene umlaufende Riemen umfassen, die außerhalb des Umlaufbereichs der Wickelvorrichtung 8, z.B. unterhalb oder seitlich vom Wickeldorn 6, entlang eines nicht angetriebenen Zugmittels/Riemens 14 umlaufen und gegen die Oberfläche des Auskleidungsschlauchs 2 in diesem Bereich anstellbar sind. Die umlaufenden Zugmittel/Riemen 14 sind dazu in der Weise am Wickeldorn 6 positioniert und besitzen eine solche Länge, dass diese zumindest teilweise im Bereich der Wickelvorrichtung 8, d.h. im Bereich des um den Innenfolienschlauch 4 herum bewegten Faserbandes 12, und teilweise im Bereich außerhalb derselben umlaufen. Der Antrieb der zusätzlichen extern an die Führungseinrichtungen 18 anstellbaren Abzugswalzen oder umlaufenden Riemen erfolgt dabei vorzugsweise über Elektromotoren.

Figur 2 zeigt weiterhin eine schematische Seitenansicht einer erfindungsgemäßen Führungseinrichtung 18, bei der der endlose Riemen 14 über zwei an den Enden angeordnete Umlenkrollen 20 geführt ist, zwischen denen eine Vielzahl von Kugellagern 26 entlang einer Reihe angeordnet sind, auf denen sich der endlos umlaufende Riemen 14 abstützt, wenn dieser mit seiner Außenseite die Innenseite des Innenfolienschlauchs 4 kontaktiert. Die Aufnahme wenigstens einer Führungseinrichtung 18 am Wickeldorn 6 kann dabei über federelastische Mittel 28 erfolgen, die beispielsweise als Feder-Dämpfer Kombination mit einem Federelement 30 und einem Dämpfungselement 31 ausgelegt sind und die jeweilige Führungseinrichtung tragen.

Die Führungseinrichtungen 18 können weiterhin über nicht gezeigte Führungen, beispielsweise Linearführungen mit Endanschlag, am Wickeldorn 6 beweglich gehalten werden, wobei die Position einer federnd am Wickeldorn aufgenommenen Führungseinrichtung 18 vorzugsweise so eingestellt wird, dass diese während des Produktionsprozesses vorzugsweise nur bis zur Hälfte des maximalen Bewegungsweges ausgelenkt ist.

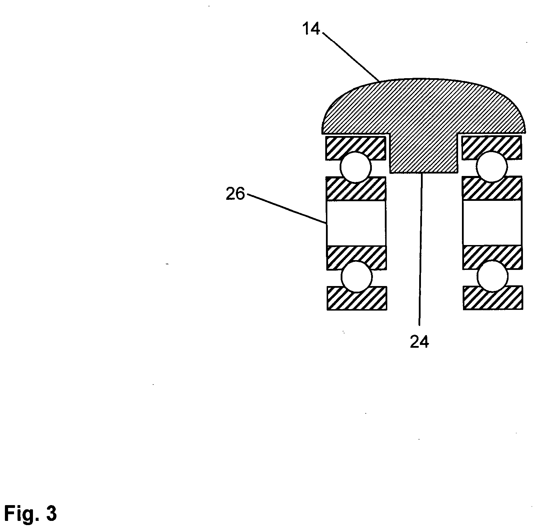

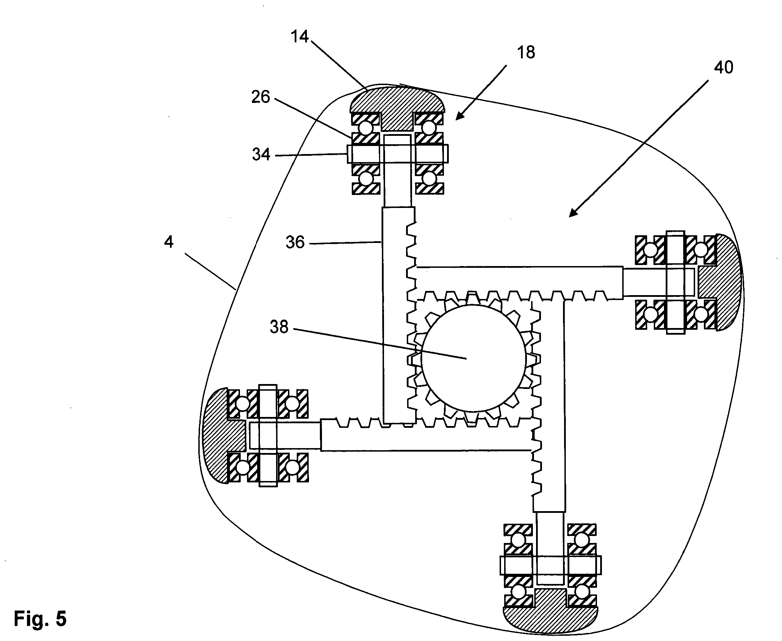

In Figur 3 ist eine schematische Querschnittsdarstellung der beanspruchten Ausführungsform des kugelgelagerten erfindungsgemäßen Riemens 14 gezeigt, der einen Mittensteg 24 besitzt. Jeweils seitlich des Mittenstegs 24 ist ein Kugellager 26 angeordnet, auf welchem der Riemen 14 in Längsrichtung gelagert ist. Die Kugellager 26 sind vorzugsweise auf einer gemeinsamen, nicht gezeigten Welle aufgenommen, wie dies beispielsweise in Figur 5 durch den Bolzen 34 angedeutet ist.

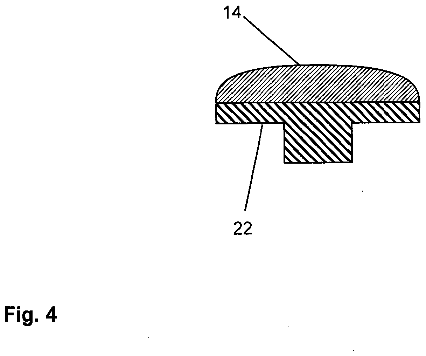

Figur 4 zeigt weiterhin eine schematische Querschnittsdarstellung eines auf der Unterseite mit Verstärkungselementen 22 versehenen erfindungsgemäßen Riemens 14. Die Oberseite des Riemens 14 besteht bei dieser Ausführungsform aus einem elastischen, vorzugsweise gummiartigen Material, wohingegen an der Unterseite des Riemens 14 kettengliedartige Verstärkungselemente 22 angeordnet sind, die beispielsweise aus einem harten Kunststoffmaterial wie Polyamid oder Polycarbonat oder auch aus Metall bestehen. Die Verstärkungselemente 22 dienen dazu, den Rollwiderstand des Riemens 14 weiter herab zu setzen.

Figur 5 zeigt schließlich eine nicht maßstabsgetreue schematische Darstellung einer erfindungsgemäßen Verstelleinrichtung 40. Die Verstelleinrichtung 40 besitzt vier Führungseinrichtungen 18, die jeweils an einer Zahnstange 36 befestigt sind und über nicht näher gezeigte Linearlager in der Weise geführt werden, dass diese durch Rotieren einer zentralen Welle 38 radial verfahren werden können. Dabei wird durch das Verdrehen der zentralen Welle 38 der durch die vier Außenseiten der Riemen 14 definierte Durchmesser des darüber geführten Innenfolienschlauchs 4 verändert.

### Liste der Bezugszeichen

- 1: Erfindungsgemäße Vorrichtung
- 2: Auskleidungsschlauch
- 4: Innenfolienschlauch
- 6: Wickeldorn
- 8: Wickelvorrichtung
- 12: Faserband
- 14: umlaufendes Zugmittel/Riemen
- 16: Abzugseinrichtung
- 18: Führungseinrichtung
- 20: Führungsrolle
- 22: Kettengliedartige Verstärkungselemente
- 24: Mittensteg
- 26: Kugellager
- 28: Federelastisches Mittel
- 30: Federelement
- 31: Dämpfungselement
- 32: Halterohr
- 34: Bolzen
- 36: Rundzahnstange
- 38: Zentrale Welle
- 40: Verstelleinrichtu

## Patentansprüche

1. Vorrichtung zur Herstellung eines Auskleidungsschlauchs (2) zur Auskleidung von Rohrleitungen, der einen umfänglich geschlossenen Innenfolienschlauch (4) und wenigstens ein auf den Innenfolienschlauch (4) aufgewickeltes, mit einem härtbaren Reaktionsharz getränktes Faserband (12) umfasst, mit einem Wickeldorn (6), an dem eine Führungseinrichtung (18) angeordnet ist, über welche hinweg der Innenfolienschlauch (4) durch eine Abzugseinrichtung (16) bewegt wird, wobei die Führungseinrichtung ein im Wesentlichen parallel zur Oberfläche des Wickeldorns (6) bewegbares endloses umlaufendes Zugmittel (14) umfasst, das über wenigstens zwei an dem Wickeldorn (6) aufgenommene freilaufende, nicht angetriebene Führungsrollen (20) bewegt wird,
**dadurch gekennzeichnet,**
**dass** das Zugmittel ein im Querschnitt pilzkopfartiger Riemen (14) ist und dass der Riemen (14) auf der Unterseite einen Mittensteg (24) umfasst und beidseitig des Mittenstegs kugelgelagert (26) ist.

2. Vorrichtung nach Anspruch 1,
**dadurch gekennzeichnet,**
**dass** der Riemen (14) auf der Unterseite vorzugsweise kettengliedartige Verstärkungselemente (22) aufweist.

3. Vorrichtung nach einem der Ansprüche 1 oder 2,
**dadurch gekennzeichnet,**
**dass** zumindest einer Führungsrolle (20) ein Bremselement, bevorzugt eine elektrische Wirbelstrombremse, zugeordnet ist.

4. Vorrichtung nach einem der Ansprüche 1 bis 3,
**dadurch gekennzeichnet,**
**dass** der Führungseinrichtung eine Verstelleinrichtung (40) zum Verstellen des Durchmessers des Wickeldorns (6) zugeordnet ist.

5. Vorrichtung nach einem der Ansprüche 1 bis 4,
**dadurch gekennzeichnet,**
**dass** die Abzugseinrichtung (16) wenigstens eine angetrieben Walze oder wenigstens einen angetriebenen umlaufenden Riemen umfasst, der außerhalb des Umlaufbereichs der Wickelvorrichtung (8), vorzugsweise unterhalb oder seitlich vom Wickeldorn (6), im Bereich eines endlos umlaufenden Zugmittels (14) umläuft und gegen die Außenseite des Auskleidungsschlauchs (2) anstellbar ist.

6. Vorrichtung nach einem der Ansprüche 1 bis 5,
**dadurch gekennzeichnet,**
**dass** die Führungseinrichtung (18) in radialer Richtung beweglich am Wickeldorn (6) aufgenommen ist und durch federelastische Mittel (28) mit einer im Wesentlichen konstanten federelastischen Kraft in radialer Richtung beaufschlagt wird.

7. Vorrichtung nach Anspruch 6,
**dadurch gekennzeichnet,**
**dass** die federelastischen Mittel (28) ein pneumatisches Federelement (30) umfassen, dass mit einer Druckluftquelle verbindbar ist.

## Claims

1. Apparatus for producing a liner sleeve (2) for lining pipelines that comprises a circumferentially closed inner film sleeve (4) and at least one fibre band (12) which is wound onto the inner film sleeve (4) and which is impregnated with a curable reaction resin, having a winding mandrel (6) on which there is arranged a guide device (18) over and beyond which the inner film sleeve (4) is moved by means of a pull-off device (16), wherein the guide device comprises an endless circulating traction means (14) which is movable substantially parallel to the surface of the winding mandrel (6) and which is moved over at least two freely running, non-driven guide rollers (20) which are received on the winding mandrel (6),
**characterized**
**in that** the traction means is a belt (14) of mushroom head-like configuration in cross section, and in that the belt (14) comprises a central web (24) on the underside and is mounted on ball bearings (26) on both sides of the central web.

2. Apparatus according to Claim 1,
**characterized**
**in that** the belt (14) has preferably chain link-like reinforcing elements (22) on the underside.

3. Apparatus according to either of Claims 1 and 2,
**characterized**
**in that** at least one guide roller (20) is assigned a braking element, preferably an electric eddy current brake.

4. Apparatus according to one of Claims 1 to 3,
**characterized**
**in that** the guide device is assigned an adjusting device (40) for adjusting the diameter of the winding mandrel (6).

5. Apparatus according to one of Claims 1 to 4,
**characterized**
**in that** the pull-off device (16) comprises at least one driven roller or at least one driven circulating belt which circulates outside of the circulating region of the wrapping apparatus (8), preferably below or to the side of the winding mandrel (6), in the region of an endlessly circulating traction means (14) and can be placed against the outside of the liner sleeve (2).

6. Apparatus according to one of Claims 1 to 5,
**characterized**
**in that** the guide device (18) is received on the winding mandrel (6) so as to be movable in the radial direction and has a substantially constant spring-elastic force applied thereto in the radial direction by spring-elastic means (28).

7. Apparatus according to Claim 6,
**characterized**
**in that** the spring-elastic means (28) comprise a pneumatic spring element (30) which can be connected to a compressed-air source.

## Revendications

1. Dispositif de fabrication d'un tube de revêtement (2) destiné au revêtement de canalisations qui comprend un tube de film intérieur (4) fermé circonférentiellement et au moins une bande de fibres (12) qui est enroulée sur le tube de film intérieur (4) et qui est imprégnée d'une résine de réaction durcissable, le dispositif comprenant un mandrin d'enroulement (6) sur lequel est disposé un système de guidage (18) sur lequel le tube de film intérieur (4) est déplacé par un moyen d'extraction (16), le système de guidage comprenant un moyen de traction rotatif sans fin (14) qui peut être déplacé sensiblement parallèlement à la surface du mandrin d'enroulement (6) et qui est déplacé sur au moins deux rouleaux de guidage (20) menés libres qui sont reçus sur le mandrin d'enroulement (6),
**caractérisé en ce que**
le moyen de traction est une courroie (14) de section transversale en forme de tête de champignon et **en ce que** la courroie (14) comprend une nervure centrale (24) sur la face inférieure et est à roulement à billes (26) des deux côtés de la nervure centrale.

2. Dispositif selon la revendication 1,
**caractérisé en ce que**
la courroie (14) comporte de préférence des éléments de renforcement (22) en forme de maillon de chaîne sur la face inférieure.

3. Dispositif selon l'une des revendications 1 et 2, **caractérisé en ce**
**qu'**un élément de freinage, de préférence un frein électrique à courant de Foucault, est associé à au moins un rouleau de guidage (20).

4. Dispositif selon l'une des revendications 1 à 3,
**caractérisé en ce que**
le dispositif de guidage est associé à un système de réglage (40) destiné à régler le diamètre du mandrin d'enroulement (6).

5. Dispositif selon l'une des revendications 1 à 4,
**caractérisé en ce que**
le système d'extraction (16) comprend au moins un rouleau mené ou au moins une courroie tournante menée qui circule à l'extérieur de la zone de circulation du dispositif d'enroulement (8), de préférence au-dessous ou sur le côté du mandrin d'enroulement (6), dans la zone d'un moyen de traction tournant sans fin (14) et qui peut être placée contre le côté extérieur du tube de revêtement (2).

6. Dispositif selon l'une des revendications 1 à 5,
**caractérisé en ce que**
le système de guidage (18) est reçu sur le mandrin d'enroulement (6) de manière mobile dans la direction radiale et est soumis par des moyens élastiques (28) à une force élastique sensiblement constante dans la direction radiale.

7. Dispositif selon la revendication 6,
**caractérisé en ce que**
les moyens élastiques (28) comprennent un élément à ressort pneumatique (30) qui peut être relié à une source d'air comprimé.
